# EUROPEAN PATENT APPLICATION

(11) **EP 2 141 891 A2**
(43) Date of publication of application: **06.01.2010**
(21) Application number: 08011795.5
(22) Date of filing: 30.06.2008
(51) Int. Cl.: H04L 29/08, G06F 17/30

(54) **Single point of entry server solution for world-wide-web annotation services with reduced latency**

(71) Applicant: Maier-Dech, Hans E., 81476 München (DE); Toni, Karl-Heinz, Boat 10, Lightermans Walk SW18 1PS London (GB)
(72) Inventor: Maier-Dech, Hans E., 81476 München (DE); Toni, Karl-Heinz, Boat 10, Lightermans Walk SW18 1PS London (GB)
(74) Representative: Müller-Boré & Partner Patentanwälte

(57) **Abstract**

Computer-implemented method for providing unified access to the World Wide Web (WWW) through a secure single-point-of-entry server (100), the single-point-of-entry server (100) comprising an intelligent and fast data rewrite engine, the method comprising:
• Receiving (107;302) from a client (130) a request (130-1) for a web site, wherein a transport connection (103) is established between the client (130) and the single-point-of-entry server (100);
• Extracting (108;304;404) user-specific information related to the client (1309 from a URI and/or a data storage device (120) connected with the single-point-of-entry server (100);
• Building (401) a user-specific request header according to the user-specific information;
• Transmitting (109;306) the request (130-1) with the user-specific request header to a host (140,150) hosting the web site;
• Receiving a response corresponding to the request (130-1) from the host (140,150) on the single-point-of-entry server (100);
• Performing (111;308-326) reprocessing of the response including at least one modification and/or emulation on the web site according to the request (130-1) at the single-point-of-entry server (100); and
• Transmitting (112;330) a modified response (403) to the client (130).

## Description

### Technical Field

The description is directed generally at computer networks and deals with security, anonymity, annotation systems as well as the minimization of network latency. The description relates in particular to a computer-implemented method, computer system, and computer program product for the provision of a secure single-point-of-entry to the World Wide Web (WWW) through a "single-point-of-entry server" (or server farm) and which includes full annotation services, and may allow for reduced latency and secure complete anonymity for the user. The single-point-of-entry server is composed of an intelligent and fast data rewrite engine embodied into a system that is best described as, but not identical to, a proxy that is integrated into a HTTP-Server for enhanced simplicity for the user (no configuration and no installation needed).

### Background

### Web servers

Web servers (or HTTP servers) are able to accept HTTP requests from clients comprising a (web) browser and serving them HTTP responses along with optional data contents. Web servers may also have the capability of logging some detailed information about client requests.
Web servers are always bound to one or more IP addresses (e.g. 208.77.188.166) which can be associated with one or multiple domain names (e.g. example.com). If a client requests data from a domain, e.g. by entering the domain name into the (web) browser, the (web) browser has to follow specific steps:
- If the IP address associated with the domain name is not known to the (web) browser, the (web) browser has to trigger a domain name lookup via one or more domain name servers (DNS).
- After retrieving the IP address from the DNS the (web) browser establishes a TCP/IP or UDP connection to the server associated to this IP address, either directly or through the relevant TCP/IP and/or UDP abstraction layer of the underlying operating system.
- Once the TCP/IP or UDP connection is established with the web server, the browser sends specific information to the web server (the request) and gets specific information back from the web server (the response)
- The response is then rendered by the browser and presented to the client in an appropriate way.

### Proxy Server

In computer networks, a proxy server, or proxy for short, may be a server (a computer system or an application program), which may service requests on behalf of its client by forwarding requests to other servers, e.g. a web server.
A proxy has to be configured by the client as an interim step in the client request and server response cycle, i.e. the IP address of the proxy has to be specified as a configuration option by the client (e.g. via a browser or a protocol program).

### Annotation systems

Annotation systems allow the embedding of additional elements in the body of a web server response and include controls to create, edit or delete annotations, and/or the annotations themselves. So far, annotation systems are only able to deal with either a very specific, controlled subset of data on the web, or data that is not even accessible from the web (e.g. intranets of a company with a proprietary annotation system solution). Partial attempts have been made to allow annotation systems to go beyond intranet boundaries and allow the annotation of any content in the web, but these have been limited by severe security aspects and speed constraints.

### Summary

This document proposes to document a computer-implemented method, computer system, and computer program product for providing a secure single-point-of-entry to the World Wide Web (WWW) service that also includes annotation services through a "single-point-of-entry server" (or server farm) and may, at the same time, provide reduced latency for the user. The single-point-of-entry server is comprised of an intelligent and fast data rewrite engine (which may be particularly embodied into a proxy-like system that is integrated into an HTTP-Server for enhanced simplicity for the user, for which no configuration and no installation is needed).
The method may involve:
- Receiving a request on the single-point-of-entry server for a web site from a client, wherein a transport connection is established between the client and the single-point-of-entry server; The requested web site may sit on any web server that may be accessible through the web in any way (unsecured, secured, with a demand for certain cookies, ...);
- Extracting user-specific information related to the requested web site by a data storage device connected to the single-point-of-entry server;
- Building a user-specific request header according to user-specific information; This user-specific request header is then be used by the single-point-of-entry server to request the web site from the (web) server hosting the web site;
- Transmitting the request with the user-specific request header to a (web) server hosting the web site through a pre-established connection from the single-point-of-entry server to the host hosting the website thereby reducing latency that would occur by DNS lookup and connection establishing from the single-point of entry server to the (web) server;
- Receiving a response on the single-point-of-entry server corresponding to the request sent to the (web) server;
- Performing intelligent and fast reprocessing of this response including at least one modification and/or emulation on the response (and including annotations, the functionality needed to add, edit and delete such annotations and all related security provisions) in line with the request that was sent from the single-point-of-entry server to the web server; and
- Transmitting the resulting modified response to the client.

In other words, the web site located on any (web) server accessible in the web is requested through the single-point-of-entry server from the client (e.g. a browser or a protocol program) by a user request. This request may happen or be embodied in various ways including, but not limited to:
- The user directs his client to the domain of the single-point-of-entry server (e.g. example.com or 208.77.188.166). The single-point-of-entry server presents the user with an option to search, such as on any search engine in the web. The user types in his search words or search phrase and will be presented with a list of links and description of web pages available in the web that match his search. By clicking on any of the links the request to retrieve the web page is sent to the single-point-of-entry server and not to the server hosting the web page.
   Example: The user opens his browser and types the URL of the single-point-of-entry server in the address bar of the browser (e.g. http://www.example.com). As a response the user sees a simple form with an input field and a submit button. The user enters the search term "patent application" and the server responds with the following list of links and descriptions of web pages matching his request:
   o Patent application - Wikipedia, the free encyclopedia http://en.wikipedia.org/wiki/Patent_application
   o European Patent Office (EPO) http://www.epo.org/
   The user clicks on the second link (http://www.epo.org/). By using algorithms described within this patent-application the consequent request for the web page identified by the URL http://www.epo.org/ is not sent to the (web) server identified by the domain epo.org, but to the single-point-of-entry-server identified by the domain example.com or any sub domain thereof.
- The user directs his client to the domain of the single-point-of-entry server (e.g. example.com or 208.77.188.166). The single-point-of-entry server presents the user with an option to enter any URL directly, e.g. using a form with a simple input field and a submit button. By entering the URL in the input field and submitting the form, the request to retrieve the web page associated with the entered URL is sent to the single-point-of-entry server and not to the server hosting the web page.
   Example: The user opens his browser and types the URL of the single-point-of-entry server in the address bar of the browser (e.g. http://www.example.com). As a response the user sees a simple form with an input field and a submit button. The user enters any URL in the input field (e.g. http://www.epo.org) and submits the form. By using algorithms described within this patent-application the consequent request for the web page identified by the URL http://www.epo.org/ is not sent to the (web) server identified by the domain epo.org, but to the single-point-of-entry-server identified by the domain example.com or any sub domain thereof.
- The user is on a web page that has been retrieved through the single-point-of-entry server and clicks on any link or performs any other action on this page.
   **Example:** The user is on the web page identified through the URL http://www.epo.org that has been retrieved through the single-point-of-entry server and enters any search term in the search box displayed on this web page. By using algorithms described within this patent-application the consequent request for the search is not sent to the (web) server identified by the domain epo.org, but to the single-point-of-entry-server identified by the domain example.com or any sub domain thereof.
- The user bookmarks a page that is retrieved through the single-point-of-entry server (e.g. the page identified by the URL http://www.epo.org/). Whenever the user clicks on the bookmark by using algorithms described within this patent-application the consequent request for the web page identified by the URL http://www.epo.org/ is not sent to the (web) server identified by the domain epo.org, but to the single-point-of-entry-server identified by the domain example.com or any sub domain thereof.

The single-point-of-entry server is neither configured on the client nor on the server that the web page is retrieved from. In particular, the client does not have to specify nor configure an IP address, a host name, and/or additional information related to the single-point-of-entry server. Additionally, the single-point-of-entry server does not modify any information on the client side. The single-point-of-entry server may be considered as comprising a web server (or HTTP server) serving any page in the web with additional functionality, something that cannot be achieved when accessing the web site from the client directly. When accessing the web site through a simple proxy server a user would have to configure its client beforehand. In addition major *security risks* would arise for the private data of the user as described later on in this patent.. In particular, since the client accesses only the single-point-of-entry server, the web site (host or web server) is not directly accessed by the client. Rather, the client merely connects to the single-point-of-entry server, which in turn connects itself to the requested web site, with the user request, and any related additional user-specific and/or user-independent information (i.e. a modified request header of the user request and/or a modified request body of said user request). The single-point-of-entry server requests the data on the host or web server through a pre-established connection in order to reduce latency for the end user. Since the single-point-of-entry server always has the same domain name and thus the same IP address the client only needs to resolve the IP of this single-point-of-entry server once, and all future requests can be sent directly to the same IP via the same established connection between the client and the single-point-of-entry server. The single-point-of-entry server pools connections to various, statistically evaluated hosts or web servers in order to further reduce DNS lookup and connection-establishing latency. Consequently, *latency to access the remote web sites is reduced for users*.

Furthermore, a user may be presented with additional functionality on any web page retrieved through the single-point-of-entry server such as, but not limited to annotation services, possibilities to easily modify and/or change data and/or information on the retrieved web page that would not be available on the web page if the user would request the web page directly.

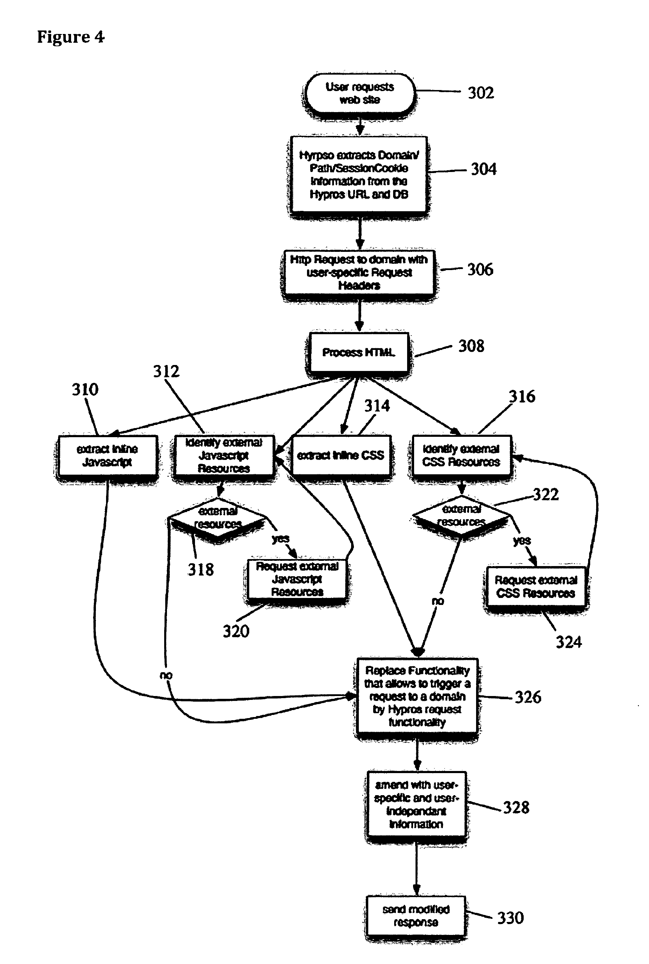

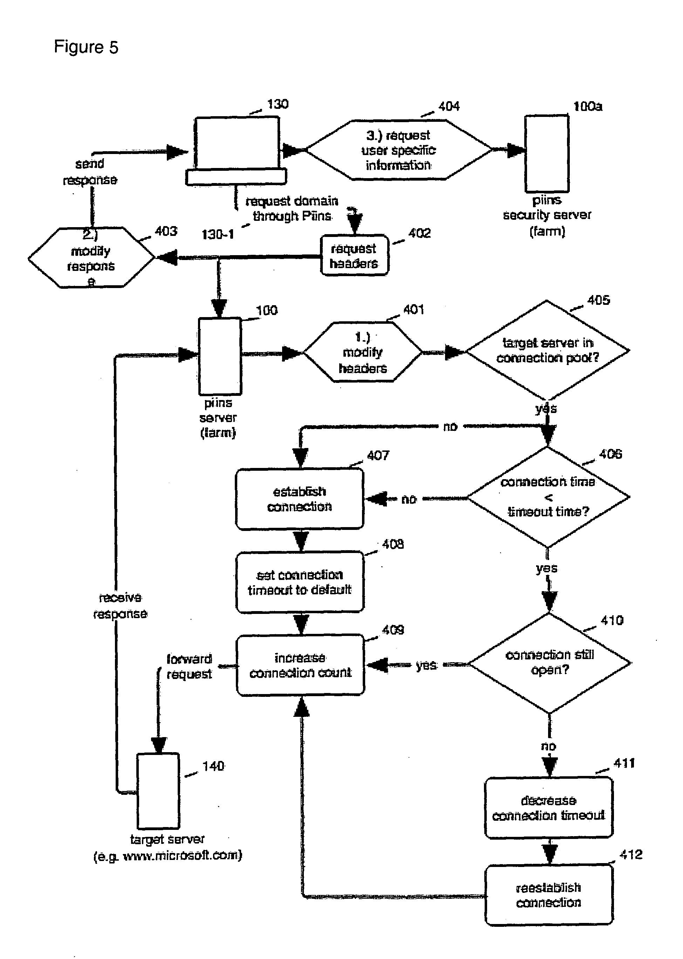

Modifications made on web pages retrieved by the user through the single-point-of-entry server are explained in detail further below with reference to figures 4 and 5.

As described above, since the client only needs to connect to the single-point-of-entry server - independently of the number of remote web sites located on different (web) servers or hosts that he may wish to access - access to these web sites become faster, since the need to determine the IP addresses of the requested servers is no longer necessary as this task is carried out proactively by the single-point-of-entry server.

The single-point-of-entry server is (substantially 100%) visible and non-transparent to the client, and at the same time (substantially 100%) transparent to the server being requested or accessed by the client through the single-point-of-entry server.

The single-point-of-entry server may be a tuple between a hardware server (or server farm) and a domain (or domain cluster) including all sub domains bound to the server (or server farm).

Particularly, the single-point-of-entry server is inherently able to provide anonymous services. Furthermore, the single-point-of-entry server may be (substantially) omnipotent in that it may cover one or more known or foreseen web-protocols (such as but not limited to http, https, ftp, ftps) and/or presentation systems.

According to another aspect, the user-specific information may comprise domain information (of the domain of the requested web site), path information, and/or session cookies information.

According to yet another aspect, the steps of transmitting the request and/or performing it may be accomplished according to user-specific information and/or user-independent information.

According to yet another aspect, the single-point-of-entry server may modify the response.

According to yet another aspect, the single-point-of-entry server is visible and non-transparent to the client but transparent to the web site.

According to yet another aspect, the method may further comprise:
- Providing IP-tunnelling to the single-point-of-entry server of a plurality of web sites for the client, and
- The clustering of a plurality of requests to be transmitted to the web site.

Such method may be particularly applied or used for decreasing latency for a user/client.

In other words, the single-point-of-entry server may support the IP-tunnelling of server IP addresses (e.g. of one or more web sites requested by the client) to the domain of the single-point-of-entry server and may support connection clustering from the single-point-of-entry server and/or server farms to the one or many (web) servers. In this way, the single-point-of-entry server increases efficiency in accessing one or more servers or server farms for one or more clients with improved latency.

According to yet another aspect, when receiving a request from a client, the following steps may also be performed:
- Logging the domain or any sub domain thereof of the (web) server hosting the requested web site on the single-point-of-entry server by incrementing a connection count that counts the frequency of the host requested through the single-point-of-entry server, and then,
- Once the client has been authenticated at the single-point-of-entry server, establishing one or more connections from the client to any hosts which have been requested once before, or more frequently.

Such method may be particularly applied or used for decreasing latency for a user/client.

Latency is reduced for users requesting access to remote servers or hosts via the single-point-of-entry server because the proposed method maintains critical relevant user information on the single-point-of-entry server, at two levels as described below:-.
- At the first (general) level, the domain data of (web) servers accessed once or more (i.e. the target servers), is logged on the single-point-of-entry server, whilst at the same time a connection counter is incremented for each of the requested domain names. How often a host is connected (i.e. the frequency of access to a given host), may be determined in two ways:
   (a) Through statistical data generally available on the access frequency to certain domains and/or their respective sub domains, and/or
   (b) From requests made to web server domains and/or their respective sub domains computed and stored at the single-point-of-entry server.
- Then, at the second (user) level, connections to one or more frequently requested and/or accessed domain names and/or their respective sub domains are also logged as they are established by the user through the single-point-of-entry server, once the client is authenticated at the single-point-of-entry server.

According to yet another aspect, transmitting a modified response involves embedding a frame and/or an iframe (referencing a domain other than the domain which the web page retrieved via the single-point-of-entry server logically and technically "belongs" to) and/or other compiled objects, such as Flash, SilverLight or similar technologies in the modified response, wherein the frame and/or the iframe and/or the compiled objects comprise private user information and/or user annotations on the requested host and/or user-specific information on the client.

Such method may be particularly applied or used for increasing security for a user/client.

Embedding a frame and/or an iframe referencing a domain (other than the domain which the web page retrieved via the single-point-of-entry server logically and technically "belongs" to) and/or other compiled objects, such as Flash, SilverLight or similar technologies, in the modified response, including any annotations, may prevent security risks. In particular, the use of frames and/or iframes or other compiled objects, such as Flash, SilverLight or similar, may prevent a (web) server from accessing user-specific information comprised in the modified response, unlike what would happen when a simple annotation service (through the simple use of a proxy server) would otherwise modify the response from the server or host. This is true since when it comes to AJAX and/or other technologies, all the data that is transferred from the same (web) server after requesting data via its domain name(s), logically and technically belongs to the very same domain. Via AJAX and/or other technologies, data from anywhere in the DOM (document object model - which is a tree like representation of all transferred data (in HTML), can be accessed and transferred back asynchronously to the same domain. Thus, the owner of the domain can gain complete access to all the information in the DOM that has been transferred. By changing the domain of the user information and/or by displaying it in compiled code (thus not being part of the DOM), i.e. by embedding the user information into an iframe that requests the information from another domain, the domain owner loses his access to this information and thus ensures that client and user-specific information, additionally embodied in the transferred data via the single-point-of-access, can no longer be read by anyone else but the client/user and/or people he chooses to share it with and/or the owner of the iframe domain- thereby providing much stronger secrecy and privacy for the client/user.

**Example**: a user requests data from the domain www.securitybreach.com via the single-point-of-access server (e.g. example.com). By using algorithms described within this patent-application the request for the web page identified by the URL http://www.securitybreach.com/ is not sent to the (web) server identified by the domain www.securitybreach.com and its sub-domain, but it is sent to the single-point-of-entry-server identified by the domain www.example.com or any sub domain thereof (e.g. the subdomain of the single-point-of-entry-server may be any encoding of the original domain including sub domains, such as but not limited to a shifting of each character by 13 characters: jjj.frphevgloernpu.pbz.example.com). The single-point-of-entry server then requests the data from the (web) server identified by the domain securitybreach.com and its sub domain www, reprocessing it according to the algorithms described in this patent, and sending the response back to the user. Logically (as per definition) all data presented "belongs" to the domain example.com rather than to securitybreach.com and its sub domain www (i.e. the user would see the address http://www.example.com or any sub domain thereof in the address bar of his browser, e.g. jjj.frphevgloernpu.pbz.example.com). AJAX requests for example can only be made to the same domain that the data logically belongs to, i.e. jjj.frphevgloernpu.pbz.example.com in the above example. For reasons of cross-domain security one should not be able to embed content from any other website). Since any JavaScript script is Turing complete (i.e. one can't determine what it does) the intelligent rewrite engine of the single-point-of-server has to be able to deal with new technologies such as but not limited to AJAX requests, any asynchronous request that is made from the client back to the (web) server. For example a server identified by domain securitybreack.com with sub domain www, has to be processed in the very same way than any request from the user to the single-point-of-entry server. As described above, any elements, such as private user information, additionally embedded by the single-point-of-entry server into the requested web site, are completely visible to the domain and respective sub domain that the data is logically bound to. It is easy to transfer any part or the whole of this data back to the server using the single-point-of-server process chain as described above and in the remainder of this patent. By embedding the private user data in a frame and/or iframe referencing another domain, and by using compiled objects, such data can no longer be easily accessed either because it now exists only in compiled form or because it now "belongs" to another domain (e.g. the private data is loaded from example.com within an iframe that is embedded into the web page that "belongs" to jjj.frphevgloernpu.pbz.example.com displaying the original content of the URL http://www.securitybreach.com/).

Furthermore embedding a frame and/or an iframe referencing a domain (other than the domain that the web page retrieved via the single-point-of-entry server logically and technically "belongs" to) and/or other compiled objects, such as Flash, SilverLight or similar technologies, in the modified response, guarantees that techniques used to exploit user cookies become ineffective, due to the same logic as described above. Otherwise the owner of the domain that data is requested from via the single-point-of-entry server could use this Cookie information to identify the user issuing the original request to the single-point-of-entry server and view, modify and/or delete all his data.

In another general aspect the method described herein provides a computer-program product, particularly tangibly embodied as a computer-readable storage medium and/or embodied as a signal or data stream, comprising of computer readable instructions which, when loaded and run in a computer system and/or computer network system, cause the computer system and/or the computer network system to perform as described in this document.

In yet another general aspect, a computer system is proposed which provides unified access to the World Wide Web (WWW) through a single-point-of-entry server. The single-point-of-entry server is composed of an intelligent and fast data rewrite engine embodied into a system that is best described as, but not identical to, a proxy that is integrated into a HTTP-Server for enhanced simplicity for the user (no configuration and no installation needed). The single-point-of-entry server can be operated to:
- Receive a request on the single-point-of-entry server for a web site from a client, wherein a transport connection is established between the client and the single-point-of-entry server; The requested web site can sit on any web server that is accessible through the web in any way (unsecured, secured, with a demand for certain cookies, ...);
- Extract user-specific information related to the requested web site by a data storage device connected with the single-point-of-entry server;
- Build a user-specific request header according to user-specific information; This user-specific request header will be used by the single-point-of-entry server to request the web site from the (web) server hosting the web site;
- Transmit the request with the user-specific request header to a (web) server hosting the web site through a pre-established connection from the single-point-of-entry server to the host hosting the website thereby reducing latency that would occur by DNS lookup and connection establishing from the single-point of entry server to the (web) server;
- Receive a response on the single-point-of-entry server corresponding to the request sent to the (web) server;
- Perform intelligent and fast reprocessing of this response including at least one modification and/or emulation on the response (and including annotations, the functionality needed to add, edit and delete such annotations and all related security provisions) in line with the request that was sent from the single-point-of-entry server to the web server; and
- Transmit the resulting modified response to the client.

According to yet another aspect, the functions described in this document can be deployed and operated according to any one of the options described below.

The functions described in this specification can be implemented as a method, as software only, as a hosted system, or using computer program products, tangibly embodied in information carriers, such as a CD-ROM, a DVD-ROM, a semiconductor memory, and a hard disk. Such computer program products may cause a data processing apparatus to conduct one or more of the operations described in this specification.

In addition, the functions described in this specification can also be implemented as a system including a processor and a memory coupled to the processor. The memory may encode one or more programs that cause the processor to perform one or more of the functions described in this specification. Further the functions described in this specification can be implemented using various MRI machines.

Details of one or more implementations are set forth in the accompanying drawings and in the descriptions below. Other features will be apparent from the description and drawings, and from the claims.

### Brief Description of the Drawings

Figure 1 shows a block diagram of the OSI (Open System Interconnection) framework.
Figure 2 shows examples of requests to a host with and without a single-point-of-entry server.
Figure 3 shows an exemplary functionality of a single-point-of-entry server from a user perspective.
Figure 4 shows a flow diagram of an exemplary processing of a user request against a single-point-of-entry server.
Figure 5 shows a flow diagram of an exemplary user request requesting a web side through a single-point-of-entry server.
Figure 6 shows a block diagram of an exemplary computer (network) system.

### Glossary of Technical Terms

The following technical terms are widely used throughout our descriptions. The terms may refer to, but are not limited to, the subsequently given explanations.

### Web server or HTTP server:

A web server may refer to a computer program or computer running a computer program that is able to accept HTTP requests from clients, client computers or user systems, which are known as browsers, and serve them HTTP responses along with optional data contents, which may include web pages such as HTML documents or other types of documents defined by MIME-types and linked objects (e.g. images). Additionally, a web server may also be able to log some detailed information about user requests from one or more clients and (the corresponding) server responses to log files. In addition, web servers may also support the following functionalities: authentication (i.e. optional authorization request (e.g. user name and password) before allowing access to one or more resources), the handling of static and/or dynamic content, HTTPS support (e.g. by SSL or TLS) to allow secure (e.g. encrypted) connections to the server on the standard port 443 instead of usual port 80, content compression (e.g. by gizp encoding), virtual hosting to serve many sites using a single IP address, large file support, and bandwidth throttling to limit the speed of responses to be able to serve more clients.

Particularly, web servers (or HTTP servers) are able to accept HTTP requests from clients comprising a (web) browser and serving them HTTP responses along with optional data contents. Web servers may also have the capability of logging some detailed information about client requests.

Web servers may be always bound to one or more IP addresses (e.g. 208.77.188.166) which can be associated with one or multiple domain names (e.g. example.com). If a client requests data from a domain, e.g. by entering the domain name into the (web) browser, the (web) browser has to follow specific steps:
- If the IP address associated with the domain name is not known to the (web) browser, the (web) browser has to trigger a domain name lookup via one or more domain name servers (DNS).
- After retrieving the IP address from the DNS the (web) browser establishes a TCP/IP or UDP connection to the server associated to this IP address, either directly or through the relevant TCP/IP and/or UDP abstraction layer of the underlying operating system.
- Once the TCP/IP or UDP connection is established with the web server, the browser sends specific information to the web server (the request) and gets specific information back from the web server (the response)
- The response is then rendered by the browser and presented to the client in an appropriate way.

### Proxy or Proxy server:

In computer networks, a proxy server may relate to a server (such as a computer system or an application program), which serves requests of its clients by forwarding requests to other servers. A client may connect to the proxy server, requesting a service, such as a file, connection, web page, or other resource, available from a different server. The proxy server may then provide at least one resource by connecting to a specified server and requesting the (requested) service on behalf of the client. A proxy server may optionally alter the client's request or the server's response. In some implementations, the proxy may serve the request without contacting the specified server. In this case, the proxy may use a caching mechanism, for example, the proxy might cache a first request to a remote server in order to save the information for later purposes. To the client or user system, the proxy server may be invisible, i.e. Internet requests and returned responses appear to the client to be directly performed with the addressed web server hosting a requested service. However, the proxy is not quite invisible/transparent to the Client/User because its IP address has to be specified as a configuration option on the client via a browser or some other protocol program.

Particularly, in computer networks, a proxy server, or proxy for short, may be a server (a computer system or an application program), which may service requests on behalf of its client by forwarding requests to other servers, e.g. a web server. A proxy may be configured by the client as an interim step in the client request and server response cycle, i.e. the IP address of the proxy has to be specified as a configuration option by the client (e.g. via a browser or a protocol program).

### Single-point-of-entry server:

A single-point-of-entry server may combine web server functionality and functionality that is best described as, but not identical to, a proxy server in that the single-point-of-entry server may be a web server with integrated proxy-like functionality so as to provide functionality, which is neither supported nor foreseen by any of the following existing solutions:-
(a) Web servers
(b) Proxy servers, or
(c) The combination of a proxy server and a web server whereby a proxy would be used in addition to a web server in order to access web sites from a client.

The single-point-of-entry server on the other hand allows a single point of access to the World Wide Web (WWW), i.e. to arbitrary web content comprising information and/or data. The single-point-of-entry server may operate on all available and future client solutions (browsers or other protocol programs) without requiring the installation of any local code, or other "plug-in"s, without the need for any particular configuration but it may nevertheless allow a (possibly) complete representation of any web content accessed through this single-point-of-entry (e.g. a URI or a URL). From a client perspective, the single-point-of-entry server acts as a normal (web) server (e.g. HTTP(S)/FTP/etc. server) with a normal request/response header. From a (web) server perspective (i.e. a server hosting a web site which may be requested by the client through the single-point-of-entry server) the single-point-of-entry server acts as a normal client on behalf of a user, whilst at the same time it may preserve the anonymity of the user.

The single-point-of-entry server may prevent security problems and/or privacy risks when accessing remote resources. The single-point-of-entry server delivers a service that goes far beyond a mere annotation service, since the single-point-of-entry server (100) may be able to modify and/or change Turing-complete functions. Contrary to an annotation service, which may act as a proxy server and incorporate data and/or information from a requested resource into a response before the data is received by a client, wherein the domain of the requested resource is not changed, the single-point-of-entry server may incorporate a frame and/or an iframe referencing a domain (other than the domain which the web page retrieved by the single-point-of-entry server logically and technically "belongs" to) and/or other compiled objects such as Flash, SilverLight or others, into the modified or changed response. The frame and/or iframe and/or other compiled objects may comprise user specific data, user annotation data, any other protectable data and/or data relating to a foreign domain. Since such data is directly linked to the server hosting the said data on the said domain, the owner of the domain may not (as it is however the case for an annotation service) be able to access the user-specific data and redirect such , user-specific data to his server. Furthermore, since the single-point-of-entry server is able to embed compiled objects from different programming and/or scripting languages including Flash, JAVA, SilverLight, and/or Active-X objects into a modified response from a server, any data sent back to the client is (substantially) no longer accessible by the server hosting the said data on the said domain.

### Annotation systems

Annotation systems may allow the embedding of additional elements in the body of a web server response and include controls to create, edit and/or delete annotations, and/or the annotations themselves. So far, annotation systems typically are only able to deal with either a very specific, controlled subset of data on the web, or data that is not even accessible from the web (e.g. intranets of a company with a proprietary annotation system solution).

### Differences between Web servers, Proxy Servers, Annotation systems and the Single-Point-Of-Entry Server

In the following section, we address some differences between a proxy server and/or a HTTP server and/or annotation systems on the one hand and the unique single-point-of-entry server concept on the other hand:
- A proxy needs to be configured by the user, either in via the operation system and/or via a client browser or via the installation of third party software. This is not the case for a single-point-of-entry server.
- A web server cannot function as a direct proxy to a client since
   ○ It is identified by an IP or multiple IP addresses and/or by one or more domain names.
   ○ It responds only to direct requests from the client.
- A proxy is completely transparent for the client and its user, once the configuration of the proxy in the browser, the operating system or any other protocol program is completed, i.e. requests from a client to a (web) server via a proxy server and the corresponding returned responses from the server through the proxy to the client, typically "appear" to communicate directly with the addressed (web) server. The configuration of the proxy is done by an IP address only.
- Annotation services just embed plain code into the HTML response of the host or (web) server before it is transferred to the client. Thus the owner of the host or web server is able to access this information in numerous ways (e.g. AJAX). The single-point-of-entry server embeds annotation and/or other personalized information by embedding frames, iframes referencing another domain than the web page retrieved via the single-point-of-entry server logically and technically "belongs" to or compiled objects such as Flash, SilverLight or others, from the same or a different domain. Consequently, the owner of the host or web server has no technical possibility to access the client's personal information anymore.
- The single-point-of-entry server may be more than just a (configuration) transparent proxy. A (configuration) transparent proxy only can intercept a TCP/IP stream if it is included by an Internet service provider (ISP) through the client - be it with or without the knowledge of a user - but it does not give the client the choice to use or not use it. By contrast, the single-point-of-entry server is always able to intercept a TCP/IP stream on request of the user independently from the ISP. Furthermore, the single-point-of-entry server is able to decide whether or not to use the data and/or information from the TCP/IP stream.
- The single-point-of-entry server may keep HTTP(S) tunnels to a (target) server or a host, based on a request from the client. By keeping tunnels to a server, latency is decreased and so performance can be increased when the client is requesting services from the server.
- A proxy must not modify the "Allow" header field of a HTTP header even when it does not understand all the methods specified, since the user agent might have other means of communicating with the origin server. The single-point-of-entry server on the other hand can modify the "Allow" header field of the HTTP header but must not do so. Hence, the single-point-of-entry server is intrinsically different from a proxy.
- For authorization aspects, the following is specified in the HTTP specification (provided by the W3C http://www.w3.org) for a proxy: "If the response includes the 's-maxage' cache-control directive, the cache may use that response in replying to a subsequent request. But (if the specified maximum age has passed) a proxy cache must first revalidate it with the origin server, using the request-headers from the new request to allow the origin server to authenticate the new request. (This is the defined behaviour for s-maxage.) If the response includes "s-maxage=0", the proxy MUST always revalidate it before re-using it." The single-point-of-entry server on the other hand may just tunnel a response from the requested (target) server to the corresponding client request.
- While a proxy must follow a no-transform directive, the single-point-of-entry server may transform on demand.
- In a HTTP header, the "Except" request header field may be used to indicate that particular server behaviours are required by a client. A (HTTP) proxy must return a 417 (Expectation Failed) status if it receives a request with an expectation that it cannot meet. However, the Expect request-header itself is end-to-end; it must be forwarded if the request is forwarded to a server. , The single-point-of-entry server on the other hand may just tunnel a response of the server to the corresponding client request.
- In a response to a server directed through a proxy, the "Proxy-Authenticate" response-header field of a HTTP header must be included as part of a 407 (Proxy Authentication Required) response. The field value consists of a challenge that indicates the authentication scheme and parameters applicable to the proxy for this Request-URI. Since the single-point-of-entry server is no proxy, the said server may not use this header field, nor provide the option to use it.
- The "Proxy-Authorization" request-header field of a HTTP header may allow a client to identify itself (or its user) to a proxy which requires authentication. The "Proxy-Authorization" field value consists of credentials containing the authentication information of the user agent for the proxy and/or realm of the resource being requested. Since the single-point-of-entry server is no proxy, the said server may not use this header field nor provide the option to use it.
- Furthermore, the single-point-of-entry server may perform the following modifications, changes, amendments, and/or enhancements to resources (e.g. data and/or information comprised in a web site requested by a user) on at least one (target) server requested and/or accessed by a client through the single-point-of-entry server:
   o With respect to JavaScript (JS)-based applications, the single-point-of-entry server may replace one or more JS-engine commands that allow a break-out of the (domain, request) tupel, such as XMLHttpRequest (for AJAX Requests) and/or the Internet Explorer Pendant, location.href, window.open and the string based eval function. Additionally, JS onClick events may be triggered by the single-point-of-entry server to revaluate and check a URI (e.g. a URL) called by the client. The single-point-of-entry server may also replace one or more absolute URL paths by at least one (domain, request) tupel.
   ○ With respect to anything in the transferred with "reference" semantics, i.e. referencing one or many external sources, the single-point-of-entry server may replace the URI (e.g. a URL) of the referenced source by at least one (domain, request) tupel.
   ○ With respect to Flash-based applications, the single-point-of-entry server may decompile in real time a Shockwave Flash (SWF) and may replace one or more commands that allow a break out (such as but not limited to getURL and getURL2). Furthermore, the single-point-of-entry server may replace one or more references to the original SWF by the decompiled or recompiled one and may enable a binary change of SWF sources.
   ○ With respect to CSS-based applications, the single-point-of-entry server may replace one or more absolute or relative URL paths within the CSS by at least one (domain, request) tupel. Absolute or relative paths in CSS files can include but are not limited to: external image reference (background-image), the CSS @import statement.
   ○ With respect to HTML-based applications, the single-point-of-entry server may replace one or more absolute URL paths by at least one (domain, request) tupel. Furthermore, the single-point-of-entry server may modify one or more built-in CSS/JS applications in HTML processed as previously described above.

### Detailed Description

In the following, a detailed description of examples will be given with reference to the drawings. It should be understood that various modifications to the examples may be made. In particular, elements of one example may be combined and used in other examples to form new examples.

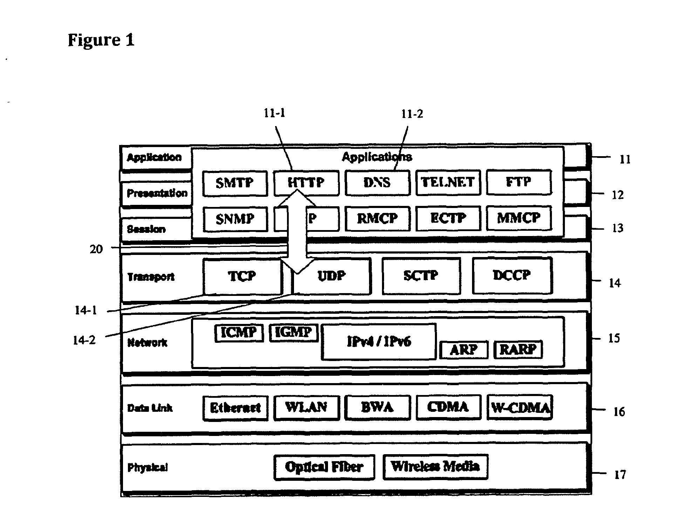

With reference to **Figure 1**, a general model referred to as OSI or Open System Interconnection (reference) model 10 defining a networking framework for implementing protocols in seven layers 11, 12, 13, 14, 15, 16, 17, 18 is shown. The OSI model 10 provides an abstract description for communication and computer network protocol design. From top to bottom, the OSI model 10 comprises an application layer 11, a presentation layer 12, a session layer 13, a transport layer 14, a network layer 15, a data link layer 16, and a physical layer 17. Control is passed from one layer to the next starting at the application layer 11 at one station, processing to the bottom layer, over a channel to the next station and back up the hierarchy.

The application layer 11 supports both application and end user processes. At this layer 11, communication partners are identified, quality of service is identified, user authentication and privacy are considered as well as constraints on data syntax are identified. The application layer 11 may provide application services including file transfer, email, and other network software services. HTTP 11-1, DNS 11-2, and FTP 11-3 are exemplary applications that exists (entirely) in the application layer.

The presentation layer 12 formats and encrypts data to be sent across a network (e.g. the Internet) providing freedom from compatibility problems. The presentation layer 12 is sometimes also referred to as syntax layer.

The session layer 13 deals with session and connection coordination, comprising setting up, coordinating, and terminating conversations, exchanges, and dialogues between applications at each end.

The transport layer 14 provides transparent transfer of data between (user) end systems (clients) and/or hosts (target servers requested by the clients) and is responsible for end-to-end error recovery and (data) flow control. The transport layer 14 may ensure (complete) data transfer. Example protocols included in the transport layer 14 are TCP (Transmission Control Protocol) 14-1 and UDP (User Datagram Protocol) 14-2.

The network layer 15 comprises switching and routing technologies, creating logical paths (also known as virtual circuits) for transmitting data from node to node.

At the data link layer 16 data packets are encoded and decoded into bits. The data link layer 16 furnishes transmission protocol knowledge and management and handles errors in the physical layer 17, flow control and frame synchronization.

The physical layer 17 conveys a bit stream encoded by the data link layer 16 through the network at the electrical and mechanical level. The physical layer 17 provides hardware means of sending and receiving data on a carrier, including defining cables, cards and physical aspects.

The application layer 11, the transport layer 14, the network layer 15, the data link layer 16, and the physical layer 17 together also form the so-called five-layer TCP/IP model or Internet protocol suite implementing a protocol stack on which the Internet and a plurality of (possibly commercial) networks run.

In one aspect, an integrated server (solution), also referred to as a single-point-of-entry server, is provided which supports the integration or combination 20 of an HTTP application 11-1 (or HTTP server) with the transport layer 14 through transport means from the transport layer 14 comprising support for TCP 14-1 and UDP 14-2 protocols.

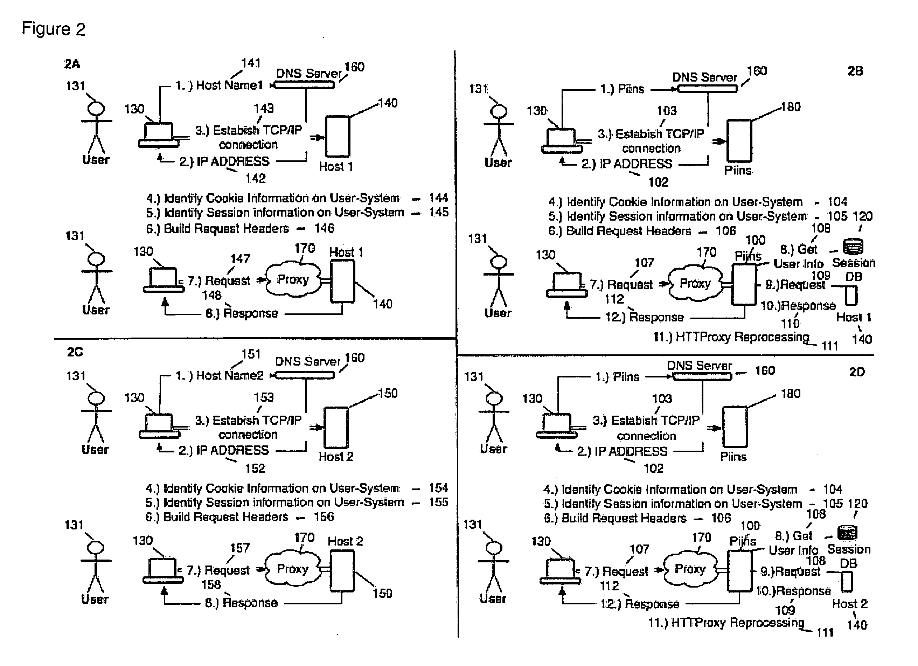

**Figure 2** shows two different ways of accessing one or more web sites hosted on different hosts (target servers) 140, 150 from a user system, client computer or client (comprising a browser or another protocol program) 130, wherein the first alternative as shown in Figures 2A and 2C shows common access to hosts 140, 150 possibly through a proxy and the second alternative as shown in Figures 2B and 2D show modified access to the hosts 140, 150 through an integrated server or single-point-of-entry server 100.
The single-point-of-entry server 100 may combine web server (HTTP server) functionality and functionality that is best described as, but not identical to, proxy server functionality in that the single-point-of-entry server may be a web server with functionality best described as, but not identical to, proxy functionality so as to provide functionality which is neither supported nor foreseen by existing solutions (i.e. web servers or proxy servers or the combination of a proxy server and a web server where a proxy is used in addition to a web server in order to access web sites located on one or more hosts from a client). The single-point-of-entry server may allow single-point-of-entry access to the World Wide Web (WWW), i.e. to arbitrary web content. The single-point-of-entry server may operate on all available and future browsers without the requirement of an installation, plug-in or configuration and may allow for (possibly) complete representation of web content through a single-point-of-entry (e.g. a URI). From a client perspective, the single-point-of-entry server may act as a normal (web) server (e.g. HTTP(S)/FTP/etc. server) with normal request/response header. From a web site (or server) which may be requested by the client, the single-point-of-entry server may act as a normal client on behalf of a user.
The single-point-of-entry server may use proprietary intelligent and fast rewrite algorithms to unite one or more of the following modelling and/or programming languages supported in a server:
- HTML (relative/absolute paths)
- CSS (relative/absolute paths/includes/etc.)
- JS (JavaScript). Through JS, it is not possible to perform cross-server requests. This problem may be solved by the single-point-of-entry server by adapting and facading XMLRequestObject and ActiveXObject.
   Furthermore, the single-point-of-entry server may solve the location.href problem and window.open. The single-point-of-entry server may intercieve one or more eval functions, which may allow a web site to break out of the single-point-of-entry server.
- Cookies. The single-point-of-entry server may enable to map cookies to one or more (foreign) domains and not only the parent domain of a requested web site and/or server.
- Session identification. In URL, session parameters are usually recognized independent of their name, e.g. id=DJKDFJK1212 or p=23232325. The single-point-of-entry server may determine whether both id and p are session IDs.
- Flash
- Java
- Silverlight
- HTTPS
- FTP

The single-point-of-entry server 100 may support the following functionalities and/or may comprise the following features:
- The single-point-of-entry server 100 may be (substantially 100%) intransparent to a client (browser or other protocol program) and (substantially 100%) transparent to a server requested or accessed by the client through the single-point-of-entry server 100.
- The single-point-of-entry server may be a tuple between a hardware server (or server farm) and a domain (or domain cluster) bound to the server (or server farm).
- The single-point-of-entry server 100 may support IP-tunnelling of server IP addresses to the domain of the single-point-of-entry server 100 and may support connection clustering on the single-point-of-entry of servers and/or server farms. In this way, the single-point-of-entry server increases efficiency in accessing one or more servers or server farms from one or more clients without recognizable latency.
- The single-point-of-entry server may inherently be able to provide anonymous services. Furthermore, the single-point-of-entry server 100 may be (substantially) omnipotent in that it may cover one or more known or foreseen web-protocols and/or presentation systems.

In the following some differences of the single-point-of-entry server 100 to a web server and/or different types of proxies (proxy servers) are discussed in addition to the ones discussed further above.
In contrast to a web proxy, which functions as a TCP/IP gateway rather than a HTTP server, the single-point-of-entry server is not limited to WWW traffic. Furthermore, the single-point-of-entry server 100 is transparent to a client 130 but not to a server 140, 150, since a proxy typically adds proxy headers to the HTTP request.

Caching proxy server: although the single-point-of-entry server 100 allows caching it's not only a caching proxy server, because the single-point-of-entry server 100 is not a proxy, since it is not transparent to the client 130.

An intercepting proxy (also known as a transparent proxy) combines a proxy server with a gateway. Connections made by client browsers through the gateway are redirected through the proxy without client-side configuration (or often knowledge). The single-point-of-entry server 100 is (substantially 100%) non-transparent and users have to choose to use it. In particular, a user 131 may not need to configure additional software on his client 130 in order to run and/or use the single-point-of-entry server 100. The user 131 may merely need to go to the domain of the single-point-of-entry server 100.On the other hand, a proxy needs to be configured e.g. by a user 131 on his client 130.

A transparent proxy is a proxy that does not modify a request (from a client) or a (corresponding) response (from a requested server) beyond what is required for proxy authentication and identification. A non-transparent proxy is a proxy that modifies a request (from a client) or a (corresponding) response (from a requested server) in order to provide some added service to the user agent, such as group annotation services, media type transformation, protocol reduction, or anonymity filtering. However, in contrast to the single-point-of-entry server 100, a non-transparent proxy is still a proxy server and has to be configured by the user.

With reference to **Figures 2A and 2C** two exemplary user requests from a client 130 to access at least two different web sites located on different hosts 140, 150 without using a single-point-of-entry server 100 are shown.

In Figure 2A, the client 130 connects a Domain Name Server (DNS) 160 (step 141) in order to receive an IP address corresponding to the hostname of a host 140 hosting a first web site a user 131 wants to access from his client 130 (step 142). After having received the IP address of the host 140 hosting the requested first web site, the client 130 establishes a permanent or temporary network connection (e.g. a TCP/IP or a UDP connection) to the host 140 (or more precisely to a first host 140 hosting the requested web site) (step 143). In steps 144 and 145 cookie information and session information are identified on the client 130 for the first host 140. Subsequently, the client 130 builds a corresponding request header (e.g. a HTTP(S), FTP or SMTP request header) in order to access the first host 140 (step 147). The request header may comprise the hostname of the first host 140, cookies for the first host 140, a user agent and further features such as (authorization and authentication aspects). The user request with the corresponding request header is then send from the client 130 to the first host 140. After the host 140 has perform the user request, a corresponding response is sent back from the first host 140 to the client 130 (step 148).

As shown in Figure 2C, the client 130 after having accessed the first host 140 now wants to request another web site located on a second host 150. Accordingly, the complete procedure as performed for the first request shown in Figure 2A has to be iterated by the client 130. Hence, the client 130 connects the DNS 160 (step 151) in order to receive an IP address corresponding to the hostname of the second web site located on the second host 150 a user 131 wants to access from his client 130 (step 152). After having received the IP address of the requested second host 150 hosting the requested second web site, the client 130 establishes a permanent or temporary network connection (e.g. a TCP/IP or a UDP connection) to the second web site (or more precisely to the second host 150 hosting the requested web site) (step 153). In steps 154 and 155 cookie information and session information are identified on the client 130 for the second host 150. Subsequently, the client 130 builds a corresponding request header (e.g. a HTTP(S), FTP or SMTP request header) in order to access the second host 150 (step 157). The request header may comprise the hostname of the second host 150, cookies for the second host 150, a user agent and further features such as (authorization and authentication aspects). The user request with the corresponding request header is then send from the client 130 to the second host 150. After the host 150 has perform the user request, a corresponding response is sent back from the second host 150 to the client (step 158).

Hence, every time the client 130 requests a new web site possibly located and/or hosted on a different host 140, 150 a DNS 160 need to be accessed by the client 130 in order to find the corresponding IP address (of the web site) and the corresponding request headers to the requested web site comprising the corresponding hostname, cookie, session, etc. information which needs to be built up. In any case, a user request and the corresponding response from a host 140, 150 hosting the requested web site may be exchanged through a proxy 170 configured on the client 130.

In contrast, with reference to **.** two exemplary user requests from a client 130 to access one or more web sites located on different hosts 140, 150 by using a single-point-of-entry server 100 are shown.

In order to access a first web site located on a first host 140 as shown in Figure 2B, a user 131 accesses from his client 130 the single-point-of-entry server 100 (steps 101, 102, and 103). In particular, the client 130 accesses a DNS 160 (step 101) in order to receive an IP address for the domain name of the single-point-of-entry server 100 (step 102). After having received the IP address for the single-point-of-entry server 100, the client 130 establishes a permanent or temporary network connection (e.g. TCP/IP or UDP) to the single-point-of-entry server 100 (step 103). Then the single-point-of-entry server 100 identifies cookie information and session information on the client 130 (steps 104 and 105) and builds a corresponding request header comprising of the domain name of the single-point-of-entry server 100, parameters for the requested web site 140, cookies, and/or a user agent (step 106). Then the user request for the first web site comprising the request header is sent from the client 130 to the single-point-of-entry 100 possibly on behalf of a proxy 170 (step 107). The single-point-of-entry server 100 gets user cookies and/or session information for the first host 140 and/or the client 130 from its domain and/or a data storage device (e.g. a database) 120 connected to the single-point-of-entry server 100 (step 108). In step 109, the single-point-of-entry server 100 sends the modified user request (i.e. the user request enriched with user cookie and session information for the first host 140) to the first host 140. After the host 140 has performed the request, the single-point-of-entry server 100 receives a corresponding response (step 110). In step 111, the single-point-of-entry server 100 reprocesses the response from the host 140 in the following ways:
- JS (JavaScript). Through JS, it is not possible to perform cross-server requests. This problem may be solved by the single-point-of-entry server by adapting and "facading" XMLRequestObject and ActiveXObject. Furthermore, the single-point-of-entry server may solve the location.href problem and window.open. The single-point-of-entry server may intercept one or more eval functions, which may allow a web site to break out of the single-point-of-entry server. All these and possibly more object identifiers are replaced by efficient String matching operations.
   **Example**: the following regular expressions can be used to identify and subsequently replace all location.href occurrences by the according façade:
   o /([^\.\w])(window\.|document\.)?location(\.hash|\.host|\.hostname|\.href|\.pathname|\.port|\.pr otocol|\.search){1,1}/
   o /([^\.\w])(window\.|document\.)?location\.replace\*s**\(/
   o /([^\.\w])(window\.|document\.){1,1}location/
- With respect to anything in the transferred with "reference" semantics, i.e. referencing one or many external sources, the single-point-of-entry server may replace the URI (e.g. a URL) of the referenced source by at least one (domain, request) tupel.
- With respect to Flash-based applications, the single-point-of-entry server may decompile at real time a Shockwave Flash (SWF) and may replace one or more commands that allow a break out (such as but not limited to getURL and getURL2). Furthermore, the single-point-of-entry server may replace one or more references to the original SWF by the decompiled or recompiled one and may enable a binary change of SWF sources.
- With respect to CSS-based applications, the single-point-of-entry server may replace one or more absolute or relative URL paths within the CSS by at least one (domain, request) tupel. Absolute or relative paths in CSS files can include but are not limited to: external image reference (background-image), the CSS @import statement.
   Example: the following regular expressions can be used to identify and subsequently replace all @import statements and respective URL(s) by the according rewritten URL(s):
   o #@import\s*(?:\"([^\">]*)\"?|'([^'>]*)'?)([^;]*)(;|$)#i
- With respect to HTML-based applications, the single-point-of-entry server may replace one or more absolute URL paths by at least one (domain, request) tupel. Furthermore, the single-point-of-entry server may modify one or more built-in CSS/JS applications in HTML processed as previously described above.
   **Example**: the following regular expressions can be used to identify and subsequently replace some or all external URL references by the according rewritten URL(s):
   o #<\s*([a-zA-Z]+)([^>]*?)>#
- Cookies. The single-point-of-entry server may enable the mapping of cookies to one or more (foreign) domains and not only to the parent domain of a requested web site and/or server.
- Session identification. In URL, session parameters are usually recognized independent of their name, e.g. id=DJKDFJK1212 or p=23232325. The single-point-of-entry server may determine whether both id and p are session IDs.
and finally sends the modified response to the client (step 112).

As shown in Figure 2D, the user 131 now wants to access a second web site located on a second host 150 through the single-point-of-entry server 100. The network connection is already established to the single-point-of-entry server 100 (steps 101, 102, 103) as well as the cookie and session information for the single-point-of-entry server 100 (steps 104 and 105). Then the client 130 sends a request with request header comprising of the domain name of the single-point-of-entry server 100, parameters for the requested web site 150, cookies, and/or a user agent to the single-point-of-entry server 100 (step 107). The single-point-of-entry server 100 gets user cookies and/or session information for the second host 150 and/or the client 130 from its domain and/or a data storage device (e.g. a database) 120 connected to the single-point-of-entry server 100 (step 108). In step 109, the single-point-of-entry server 100 sends the modified user request (i.e. the user request enriched with user cookie and session information for the second host 150) to the second host 150. After the host 150 has performed the request, the single-point-of-entry server 100 receives a corresponding response (step 110). In step 111, the single-point-of-entry server 100 reprocesses the response from the host 150 and sends the modified response to the client (step 112).

By performing and/or accessing web sites through the single-point-of-entry server 100 as described with reference to Figures 2B and 2D, the IP-tunnelling of web sites possibly located and/or hosted on different hosts 140, 150 to the domain of the single-point-of-entry server 100 is provided so that the client 130only once needs access to a DNS 160 for the IP address of the domain of the single-point-of-entry server 100 (which can be cached on the client 130) so that delays linked to the determining of the IP address are avoided independently from the number of web sites requested by the client 130. By caching the single-point-of-entry server 100 IP address on the client 130, steps 101 to 105 of Figures 2B and 2D are not required for any subsequent web site requested by the client 130 through the single-point-of-entry server 100. Hence, access to hosts 140, 150 hosting the requested web sites can be performed more efficiently. Furthermore, the single-point-of-entry server 100 may bundle requests from one or more clients 130 to a host 140, 150 such that efficiency can be further enhanced.

In the scenario shown in Figures 2B and 2D the user 131 is not forced to configure any additional software for the single-point-of-entry server 100 on his client 130. Furthermore, the single-point-of-entry server 100 does not perform any modifications and/or changes on the client 130.

In a further exemplary implementation, the single-point-of-entry server 100 is operable to cache IP addresses of web sites on different hosts 140, 150.

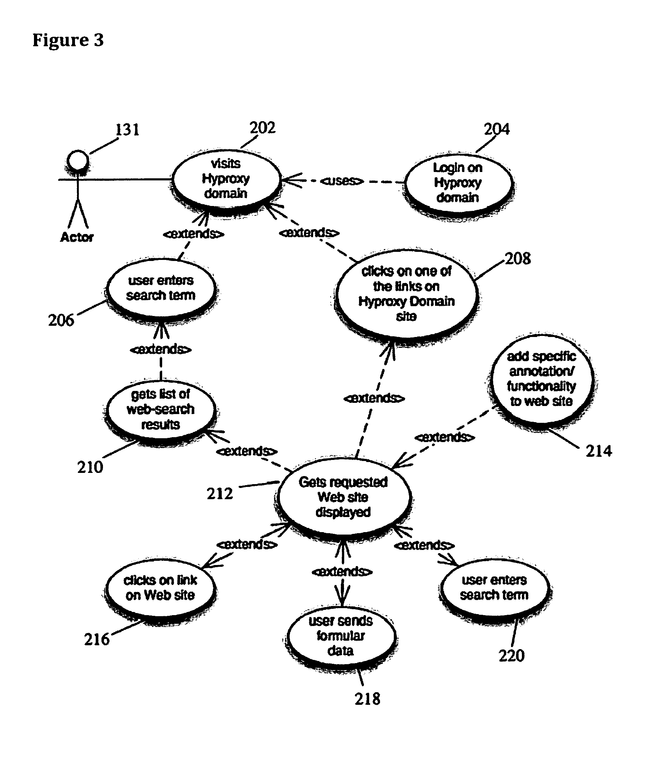

**Figure 3** shows exemplary functionality of the single-point-of-entry server 100 from a user 131 perspective. The single-point-of-entry server 100 may comprise a user interface (UI) through which the user may interact with the server 100 comprising one or more of the possibilities shown in Figure 3.

For example, the user 131 may visit the domain of the single-point-of-entry server 100 (step 202). For this purpose, the user 131 may log-in e.g. by authenticating himself to the single-point-of-entry server 100 (step 204). Having accessed the single-point-of-entry server 100, the user may enter search terms including one or more requested web sites on the server 100 (step 206) and/or the user 131 may select one or more links (e.g. to remote web sites) on the server 100 (step 208). When performing a search through the UI of the server 100 (step 206), the server 100 provides the user 131 with one or more web-search results or responses (e.g. one or more links to web sites) from one or more hosts (step 210). In this case as well as when the user 131 has selected one or more links (e.g. to different web sites) provided on the server 100, the server 100 displays (e.g. through the UI) the requested web sites to the user 131 (step 212). When requested web sites are displayed to the user 131 through links, the user may perform one or more of the following actions on the displayed links. The user 131 may click on at least one link in order to reach a corresponding web site (step 216), the user may add specific annotations and/or functionality to the web site (step 214) although he 131 is not locally at said web site, the user 131 may sends formula data to at least one web site corresponding to at least one displayed link (step 218), and/or the user 131 may enter search terms to be performed on one or more services located at the linked web sites (step 220).

**Figure 4** shows an exemplary flow diagram of an exemplary user request from a client 130 to a host 140, 150 hosting a requested web site and/or service using the single-point-of-entry server 100. A user 131 may request a web site from his client 130 through the single-point-of-entry server 100 (step 302). The single-point-of-entry server 100 extracts information concerning the client 130 and/or the requested web site comprising domain, path, session, and/or cookie information from its domain and/or a connected database (step 304). In step 306, the single-point-of-entry server 100 sends the client's (HTTP) request, now modified through the single-point-of-entry server 100, to the requested web site 140, 150 comprising a user-specific request header comprising (at least part of) the afore extracted information. After having received a corresponding response to the user request from the host hosting the requested web site and/or service, the single-point-of-entry server 100 process and/or reprocesses data, e.g. HTML-based data and/or information comprised in the response from the requested web site and/or service (step 308). Processing and/or reprocessing the response may comprise modifications, changes, enhancements, and/or emulations of data and/or information comprised in the response from the host to the corresponding user request.

The step of processing and/or reprocessing the response from the host 140, 150 (308) may comprise one or more of the following steps:
- Extracting inline JavaScript (JS) (step 310) (i.e. JS data including in the HTML data),
- Identifying external JS resources (step 312) by determining (step 318) and accessing said external JS resources (step 320), and/or
- Extracting inline CSS (step 314) (i.e. CSS data included in the HTML data), and
- Identifying external CSS resources (step 316) by determining (step 322) and accessing said external CSS resources (step 324).

Subsequently, the single-point-of-entry server 100 replaces the functionality of the previously processed HTML, JS, and/or CSS data in the response (step 326). Such a replacement may trigger the user request to the requested web site via the single-point-of-entry server request functionality. In step 328, the server 100 may amend user-specific and user-independent information and/or data in the response. Finally, in step 330 the server 100 sends a modified response from the web site 140, 150 to the client 130.

**Figure 5** shows an exemplary user request from a client 130 requesting a web site located on a server (or host) 140 through a single-point-of-entry server 100.

In one example, a user may access the single-point-of-entry server 100 through a domain name for the server 100 (such as a www-address) from its client 130. The single-point-of-entry server 100 provides the user with one or more links to web sites (e.g. in a list), a search functionality and/or similar other ways to access other web-sites, such as for example a user's recent browsing history, favorites, etc.. Once the user clicks on one or more of the available links or performs a search through the search functionality, a user is in the domain of the single-point-of-entry server 100. A link to a web site in the World Wide Web (WWW) provided through the single-point-of-entry server 100 may be defined or specified by the tuple of a domain *d* and a user request from a client 130 *r,* illustrated by *(d, r)*, e.g. *d* == (d.single_point_of_entry.com), *r* == http://Microsoft.com/test. Such a tuple *(d*, *r)* may be (algorithmically) processed to a single URI (in particular a URL) (located) on the domain d.single_point_of_entry.com of the single-point-of-entry server 100. Other domains than that of the single-point-of-entry server 100 may be used.

In the following an exemplary implementation of a user interaction with the single-point-of-entry server 100 is illustrated when the user is already in the domain of the single-point-of-entry server 100, e.g. the user has requested a web site through the search functionality provided by the single-point-of-entry server 100. In particular, Fig. 5 exemplary shows what may happen with the user request performed on the single-point-of-entry server 100 to a remote web site located on another server (or host) 140.

In one exemplary implementation, HTTP(S) requests from a user to one or more remote web sites or pages located on one or more different servers 140 and the corresponding responses from the servers 140 through the single-point-of-entry server 100 are processed and/or reprocessed and also evaluated, computed, modified, and/or emulated as follows.

In step 401, a (HTTP) request header 402 of the user request 130-1 requesting a web site (in terms of a remote domain) located on a (target) server or host 140 through the single-point-of-entry server 100 may be modified and/or enhanced by the single-point-of-entry server 100. Modifications and/or enhancements of the request header 402 of the user request 130-1 may include but are not limited to keep-alive, cookie information, session information, etc.

The modified user request 130-1, comprising a modified request header, is forwarded to the host 140 hosting the requested web site and/or service through the single-point-of-entry server 100 by performing steps 405-412. In step 405, the single-point-of-entry server checks whether the target server or host 140 hosting the requested web site is included in a given connection pool. If this is the case, the single-point-of-entry server 100 checks, whether the the connection time is less than a (possible predefined) timeout limit (step 406) otherwise steps 407 to 409 are performed: a new connection to the host 140 is established (step 407), a timeout limit for the new connection is set to a (possibly predefined) default value (step 408), a connection count for the new connection is increased (step 409) and the user request 130-1 is forwarded to the host 140. If the time of the connection is less than the timeout limit (step 406) and if the connection to the request server or host 140 from the single-point-of-entry server 100 is still open (step 410) a connection count is increased (step 409) and the user request 130-1 is forwarded to the host 140. Otherwise (i.e. if the connection from the single-point-of-entry server 100 to the host 140 is no longer open), the connection timeout is decreased (step 411), a new connection to the host 140 is re-established (step 412). Subsequently, for the re-established connection, a connection count is increased (step 409) and the user request 130-1 is forwarded to the host 140.

In one exemplary implementation, one or more connections to one or more target servers or hosts 140 from the single-point-of-entry server 100 may be established through two levels. On a first (general) level, the single-point-of-entry server 100 may secure (permanently) open connections within a connection pool from the single-point-of-entry server 100 to one or more frequently accessed hosts 140 in order to minimize latency. On a second (user-based) level, i.e. after a user has authenticated himself at the single-point-of-entry server 100, connections to hosts 140 frequently requested by the user are incorporated into the connection pool in order to minimize latency for the user's frequently requested web addresses. In other words, latency for connections to target servers 140 can be reduced via connection pooling to one or more target servers 140. Such connection pooling may be achieved without user configuration requirement so that any change and/or intervention at the configuration or operating system level may be performed directly by the single-point-of-entry server 100.

On the first level in step 409 the domain of the requested target server is written to a log on the single-point-of-entry server 100 and a connection count to the target server 140 is incremented to indicate how often the domain of the target server 140 is accessed via the single-point-of-entry server 100. Alternatively, such log data, including how often a target server 140 has been logged, may be predetermined either based on statistics generally available from various data and/or service providers regarding the frequency of page requests to target servers 140, and/or from statistics held on the single-point-of-entry server itself, also giving the frequency of page and/or site requests. Because of the (substantial) need to permanently (or are least for a predefined period of time) keep connections open to (frequently) accessed or requested target servers 140, a network connection (e.g. a TCP/IP connection) from a user requesting a target server 140 to the target server 140 in question, may be maintained on the single-point-of-entry server 100: The user has already made the connection to the single-point-of-entry server 100 and the single-point-of-entry server 100 keeps these connections to one or more frequently requested target servers 140 open. In this way, latency for the user is reduced to a minimum when connecting to target servers 140 from his client 130.

On the second level, after a user has identified himself and logged in to the single-point-of-entry server 100, the single-point-of-entry server 100 starts or begins (in the background) to establish connections to frequently accessed and/or requested target servers 140, such that these connections to said frequently requested target servers 140 reduce latency.

To keep connections open from the single-point-of-entry server 100 to one or more target servers 140, a timeout limit specified for each of the target servers 140 is avoided by sending a request to the respective target server 140 from the single-point-of-entry server 140, within a time period which is shorter than the respective timeout limit set for each of the target servers 140a In step 403, a response from the (target) server 140 to the user request 130-1 may be modified, enhanced, and/or adapted by the single-point-of-entry server 100. Modifications and/or enhancements to the response, in particular to the response header from the (target) server 140 to the user request 130-1 may include but are not limited to keep-alive, cookie information, session information, etc.

Additionally, the response body of the response from the (target) server 140 may be modified, amended, changed, and/or enhanced with additional information. The additional information may be either user-specific or user-independent.

Due to possible security breaches that may arise through network communication with the single-point-of-entry server 100 from the client side 130 and/or from the target server-side 140, the single-point-of-entry server 100 may include, in one exemplary implementation, some user-independent information into the response body. Some reasons for possible security breaches may include situations where the single-point-of-entry server 100 modifies, changes, and/or enhances the response body of a response retrieved from a web site or web page located on the target server 140, and this modification, change, or enhancement becomes part of the very same DOM structure of the HTML that all original JavaScript produced by the requested web site has access to, and is thus (at least partially) accessible from a third party and thus becomes a security risk for any personal information or user-specific information. For example, user-specific information may be transferred by a simple JavaScript to the owner of a web site outside the system which includes the single-point-of-entry server 100. Furthermore, since the parsing of a DOM structure (e.g. of a XHTML or HTML page) is Turing-complete, the single-point-of-entry server 100 may not disallow certain information in the DOM to be parsed. A third party could therefore compromise this information. Furthermore, the owner of the requested domain at a target server 140 may include cookie information in its response to the user request 130-1 from the system 130 of the user, by using for example a request formulated using a simple JavaScript). This would enable the owner of the requested web site to log in as the user and steal/delete/modify the user's data either maliciously or un-malicously.

Further changes, modifications, and/or enhancements of the (original) request body of the user request 130-1 performed by the single-point-of-entry server 100 may include, but are not limited to:
With respect to JavaScript (JS) code commands comprised in the request body:
   - Replacing at least one JS-engine command that allows a break-out of a (domain, request) tuple used by the single-point-of-entry server 100 indicating the domain of the single-point-of-entry server 100 and a web site requested by the user in his request 130-1, such as: XMLHttpRequest (for AJAX Requests) or an IE Pendant, location.href, window.open;
   - Replacing the Turing-complete, String based eval function;
   - Triggering onClick events to re-evaluate and check the URL of the requested web site called or requested by the user; and/or
   - Replacing at least one absolute URL path by the (domain, request) tuple corresponding to the user request 130-1 performed through the single-point-of-entry server 100.
With respect to Flash code commands comprised in the request body:
   - De-compiling at real time the Shock wave Flash (SWF) to re-SWF and replacing at least one command that allows a break out (getURL and getURL2) of a (domain, request) tupel used by the single-point-of-entry server 100 indicating the domain of the single-point-of-entry server 100 and a web site requested by the user in his request 130-1;
   - Replacing at least one reference to the original SWF by the de-compiled or recompiled SWF, i.e. re-SWF; and/or
   - Performing a binary change of SWF sources.
With respect to CSS code commands comprised in the request body:
   - Replacing at least one absolute URL path by a (domain, request) tuple used by the single-point-of-entry server 100 indicating the domain of the single-point-of-entry server 100 and a web site requested by the user in his request 130-1.
With respect to HTML or XHTML code commands comprised in the request body:
   - Replacing at least one absolute URL path by a (domain, request) tupel used by the single-point-of-entry server 100 indicating the domain of the single-point-of-entry server 100 and a web site requested by the user in his request 130-1; and/or
   - Processing CSS/JS comprising in the XHTML or HTML data as previously described above.

In one exemplary implementation, the single-point-of-entry server 100 may close (avoid or prevent) one or more (preferably all) of the previously described security breach that may inherently exist for (potentially all) existing and/or foreseen annotation algorithms, which may be used to annotate requests and corresponding responses to and from web sites and/or web pages. Prevention or Close of security breach may be achieved by requesting user-specific information (step 404) from a security server or server farm 100a connected to the single-point-of-entry server. Such a request for user-specific information from the client to the single-point-of-entry server 100 (step 404) may include one or more of the following procedures or methods.

In one implementation aspect, the single-point-of-entry server 100 may include only non user-specific (or user independent) JS in the modified body (which is modified, changed, and/or enhanced by the single-point-of-entry server 130-1) of an original response from the target server 140 corresponding to the user request 130-1.

In another implementation aspect, parts of JS included in the modified body (which is modified, changed, and/or enhanced by the single-point-of-entry server 130-1) of an original response from the target server 140 corresponding to the user request 130-1may modify the DOM structure of the original response body and embed frames and/or iframes and/or other compiled objects such as Flash, SilverLight or others that point to a domain different from the requested web site. Such data (embedded frames and/or iframes) which points to a domain different from the requested one are however not accessible by the original JS of the original response body sent from the target server 140 in response to the user request 130-1. The content for said frames and/or iframes may e.g. be delivered from any other domain (e.g. pointing to the security server 100a).

The content of the frames and/or iframes embedded in the response body from the target server 140 corresponding to the user request 130-1 may include private or user-specific information since the frames and/or iframes are not accessible from outside the single-point-of-entry server 100, which is in communication with the client 130.

The loaded JS comprises a private secure key that is only known to the JS code inside the frames and/or iframes. Each time there is a user request 130-1 to the server 140 this private secure key has to be sent to the server 140 in order to allow the execution of the request.

The frames and/or iframes may set a cookie on a client 130 further to increase security. This enables the single-point-of-entry server (100) to perform a double check of session-information in the cookie and the private secure key in order to allow execution of any request that included user-information.

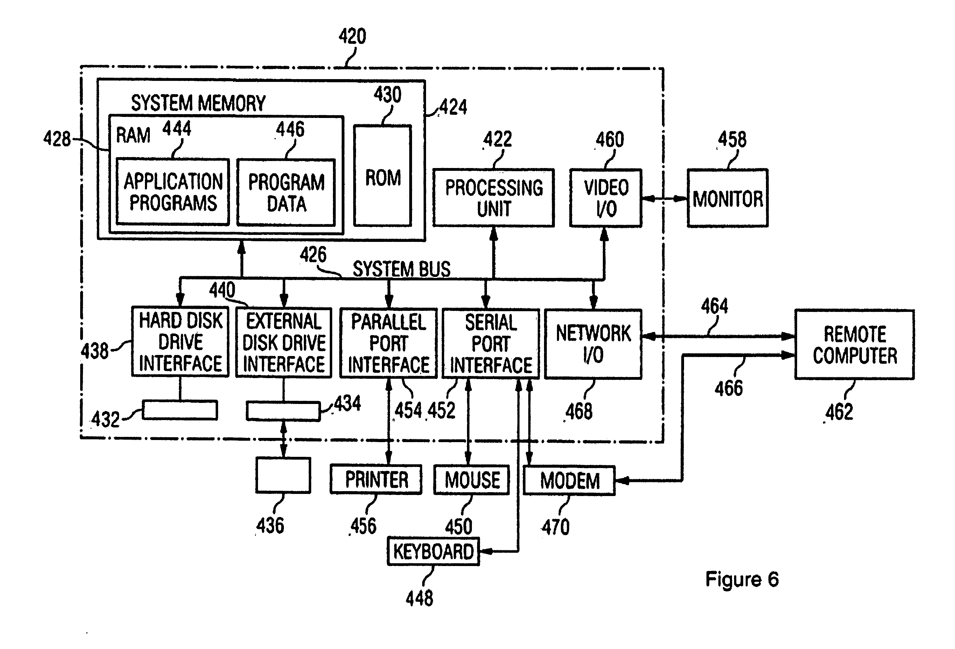

With reference to **Figure 6**, an exemplary system for implementing the invention includes a general purpose computing device in the form of a conventional computing environment 420 (e.g. personal computer), including a processing unit 422, a system memory 424, and a system bus 426, that couples various system components including the system memory 424 to the processing unit 422. The processing unit 422 may perform arithmetic, logic and/or control operations by accessing system memory 424. The system memory 424 may store information and/or instructions for use in combination with processing unit 422. The system memory 424 may include volatile and non-volatile memory, such as random access memory (RAM) 428 and read only memory (ROM) 430. A basic input/output system (BIOS) containing the basic routines that helps to transfer information between elements within the personal computer 420, such as during start-up, may be stored in ROM 430. The system bus 426 may be any of several types of bus structures including a memory bus or memory controller, a peripheral bus, and a local bus using any of a variety of bus architectures.

The personal computer 420 may further include a hard disk drive 432 for reading from and writing to a hard disk (not shown), and an external disk drive 434 for reading from or writing to a removable disk 436. The removable disk may be a magnetic disk for a magnetic disk driver or an optical disk such as a CD ROM for an optical disk drive. The hard disk drive 434 and external disk drive 434 are connected to the system bus 426 by a hard disk drive interface 438 and an external disk drive interface 440, respectively. The drives and their associated computer-readable media provide non-volatile storage of computer readable instructions, data structures, program modules and other data for the personal computer 420. The data structures may include data relevant to the implementation of the computer-implemented method for providing unified access to the World Wide Web (WWW) through a single-point-of-entry server, the single-point-of-entry server being composed of a proxy integrated into a HTTP-Server, as described in more detail before in this document. The relevant data may be organized in a database, for example a relational or object database.

Although the exemplary environment described herein employs a hard disk (not shown) and an external disk 442, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 442, ROM 430 or RAM 428, including an operating system (not shown), one or more application programs 444, other program modules (not shown), and program data 446. The application programs may include at least a part of the functionality as detailed in Figs. 1 to 4.

A user may enter commands and information, as discussed below, into the personal computer 420 through input devices such as keyboard 448 and mouse 450. Other input devices (not shown) may include a microphone (or other sensors), joystick, game pad, scanner, or the like. These and other input devices may be connected to the processing unit 422 through a serial port interface 452 that is coupled to the system bus 426, or may be collected by other interfaces, such as a parallel port interface 454, game port or a universal serial bus (USB). Further, information may be printed using printer 456. The printer 456, and other parallel input/output devices may be connected to the processing unit 422 through parallel port interface 454. A monitor 458 or other type of display device is also connected to the system bus 426 via an interface, such as a video input/output 460. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, or the like. To communicate, the computer environment 420 may operate in a networked environment using connections to one or more electronic devices. Fig. 6 depicts the computer environment networked with remote computer 462. The remote computer 462 may be another computing environment such as a server, a router, a network PC, a peer device or other common network node, and may include many or all of the elements described above relative to the computing environment 420. The logical connections depicted in Fig. 6 include a local area network (LAN) 464 and a wide area network (WAN) 466. Such networking environments are commonplace in offices, enterprise-wide computer networks, intranets and the Internet.

When used in a LAN networking environment, the computing environment 420 may be connected to the LAN 464 through a network I/0 468. When used in a WAN networking environment, the computing environment 420 may include a modem 470 or other means for establishing communications over the WAN 466.

The modem 470, which may be internal or external to computing environment 420, is connected to the system bus 426 via the serial port interface 452. In a networked environment, program modules depicted relative to the computing environment 420, or portions thereof, may be stored in a remote memory storage device resident on or accessible to remote computer 462. Furthermore other data relevant to the application of the insurance claim management evaluation method (described in more detail further below) may be resident on or accessible via the remote computer 462. The data may be stored for example in an object or a relation database. It will be appreciated that the network connections shown are exemplary and other means of establishing a communications link between the electronic devices may be used.

Accordingly, the description is directed generally at computer networks, and deals with security, anonymity, annotations systems as well as the minimization of network latency. The description refers in particular to a computer-implemented method, computer system, and computer program product for the provision of a secure single-point-of-entry to the World Wide Web (WWW) through a "single-point-of-entry server" (or server farm) and which includes full annotation services and may allow for reduced latency and secure complete anonymity for the user. The single-point-of-entry server is composed of an intelligent and fast data rewrite engine embodied into a system that is best described as, but not identical to, a proxy that is integrated into a HTTP-Server for enhanced simplicity for the user (no configuration and no installation needed).

Particularly, the present descriptions refers to a computer-implemented method, computer program product and computer system for providing unified access to the World Wide Web (WWW) through a "single-point-of-entry server" (or server farm) and which may include full annotation services, and allow for reduced latency and complete anonymity for the user. The single-point-of-entry server is composed of an intelligent and fast data rewrite engine embodied into a system that is best described as, but not identical to, a proxy that is integrated into a HTTP-Server for enhanced simplicity for the user (no configuration and no installation needed), the method particularly comprising the following steps:
Receiving a request on the single-point-of-entry server for a web site from a client, wherein a transport connection is established between the client and the single-point-of-entry server; The requested web site can sit on any web server that is accessible through the web in any way (unsecured, secured, with a demand for certain cookies, ...);
Extracting user-specific information related to the requested web site by a data storage device connected with the single-point-of-entry server;
Building a user-specific request header according to user-specific information; This user-specific request header will be used by the single-point-of-entry server to request the web site from the (web) server hosting the web site;
Transmitting the request with the user-specific request header to a (web) server hosting the web site through a pre-established connection from the single-point-of-entry server to the host hosting the website thereby reducing latency that would occur by DNS lookup and connection establishing from the single-point of entry server to the (web) server;
Receiving a response on the single-point-of-entry server corresponding to the request sent to the (web) server;
Performing intelligent and fast reprocessing of this response including at least one modification and/or emulation on the response (and including annotations, the functionality needed to add, edit and delete such annotations and all related security provisions) in line with the request that was sent from the single-point-of-entry server to the web server; and
Transmitting the resulting modified response to the client.

The computing system described above is only one example of the type of computing system that may be used to implement the method described herein for the provision of unified access to the World Wide Web (WWW) through a single-point-of-entry server, the latter being composed of a proxy integrated into a HTTP-Server.

### List of Reference Numerals

- 10: OSI reference model
- 11: application layer
- 11-1, 11-2: application
- 12: presentation layer
- 13: session layer
- 14: transport layer
- 14-1, 14-2: transport protocol
- 15: network layer
- 16: data link layer
- 17: physical layer
- 100: single-point-of-entry server
- 101 to 112, 141-148, 151-158: communication
- 120: data storage device
- 130: client computer or client
- 131: user
- 140, 150: host
- 160: DNS server
- 170: proxy
- 202, 204, 206, 208, 210,:
- 212, 214, 216, 218, 220: user functionality provided by single-point-of-entry server
- 302, 304, 306, 308, 310, 312, 314, 316,:
- 318, 320, 322, 324, 326, 328, 330: interaction with a single-point-of-entry server
- 401: modification of user request header
- 402: user request header
- 403: modified response
- 404: requesting user-specific information
- 405: to412 connecting from a single-point-of-entry server to a host
- 420: conventional computing environment
- 422: processing unit
- 424: system memory
- 426: system bus
- 428: random access memory (RAM)
- 430: read only memory (ROM)
- 432: hard disk drive
- 434: external disk drive
- 436: removable disk
- 438: hard disk drive interface
- 440: external disk drive interface
- 442: external disk
- 444: one or more application programs
- 446: program data
- 448: keyboard
- 450: mouse
- 452: serial port interface
- 454: parallel port interface
- 456: printer
- 458: monitor
- 460: video input/output
- 462: remote computer
- 464: local area network (LAN)
- 466: wide area network (WAN)
- 468: network I/0
- 470: a modem

## Claims

1. Computer-implemented method for providing unified access to the World Wide Web (WWW) through a secure single-point-of-entry server (100), the single-point-of-entry server (100) comprising an intelligent and fast data rewrite engine, the method comprising:
• Receiving (107; 302) from a client (130) a request (130-1) for a web site, wherein a transport connection (103) is established between the client (130) and the single-point-of-entry server (100);
• Extracting (108; 304; 404) user-specific information related to the client (1309 from a URI and/or a data storage device (120) connected with the single-point-of-entry server (100);
• Building (401) a user-specific request header according to the user-specific information;
• Transmitting (109; 306) the request (130-1) with the user-specific request header to a host (140, 150) hosting the web site;
• Receiving a response corresponding to the request (130-1) from the host (140, 150) on the single-point-of-entry server (100);
• Performing (111; 308-326) reprocessing of the response including at least one modification and/or emulation on the web site according to the request (130-1) at the single-point-of-entry server (100); and
• Transmitting (112; 330) a modified response (403) to the client (130).

2. Method according to claim 1, wherein the steps of transmitting the request (109; 306) and/or performing (111; 308-326) are accomplished according to the user-specific information and/or user-independent information.

3. Method according to claim 1 or 2, wherein the response is modified by the single-point-of-entry server (100).

4. Method according to any one of the preceding claims, wherein the single-point-of-entry server (100) is intransparent to the client (130) and transparent to the web site (140, 150).

5. Method according to any one of the preceding claims further comprising:
• Providing an IP-tunnelling to the single-point-of-entry server (100) of a plurality of web sites (140, 150) for the client (130), and
• Clustering of a plurality of requests to be transmitted to the web site (140,150).

6. Method according to any one of the preceding claims, wherein when receiving a request (130-1) from a client (130) further performing the steps of:
• Logging a domain of the host (140) hosting the requested web site by incrementing a connection count counting a frequency of the host (140) requested through the single-point-of-entry server, and
• After the client (130) being authenticated at the single-point-of-entry server (100), establishing one or more connections from the client (130) to respective one or more frequently requested hosts.

7. Method according to any one of the preceding claims, wherein transmitting a modified response further comprises:
• Embedding a frame and/or an iframe and/or other compiled objects in the modified response (403), wherein the frame and/or the iframe and/or other compiled objects comprise data on the requested host (140) and/or user-specific information on the client (130).

8. Computer program product comprising computer readable instructions, which when loaded and run in a computer and/or computer network system, causes the computer system and/or the computer network system to perform operations according to a method of any one of the preceding claims.

9. Computer system for providing unified access to the World Wide Web (WWW) through a single-point-of-entry server (100), the single-point-of-entry server (100) being composed of a proxy-like system integrated into a HTTP-Server, the system comprising a single-point-of-entry server (100) operable to:
• Receive (107; 302) from a client (130) a request (130-1) for a web site, wherein a transport connection (103) is established between the client (130) and the single-point-of-entry server (100);
• Extract (108; 304; 404) user-specific information related to the client (130) from a URI and/or a data storage device (120) connected with the single-point-of-entry server (100);
• Build (401) a user-specific request header according to the user-specific information;
• Transmit (109; 306) the request with the user-specific request header to a host (140,150) hosting the web site;
• Receiving a response corresponding to the request (130-1) from the host (140,150) on the single-point-of-entry server (100);
• Perform (111; 308-326) reprocessing of the response including at least one modification and/or emulation on the web site according to the request (130-1) at the single-point-of-entry server (100); and
• Transmit (112; 330) a modified response (403) to the client (130).

10. System according to claim 9, wherein the single-point-of-entry server (100) is further operable to transmit the request and/or to perform one or more operations according to the user-specific information and/or user-independent information.

11. System according to claim 9 or 10, wherein the single-point-of-entry server (100) is further operable to modified the response.

12. System according to any one of claims 9 to 11, wherein the single-point-of-entry server (100) is intransparent to the client (130) and transparent to the web site (140, 150).

13. System to reduce latency for the user/client (130) according to any one of claims 9 to 12, wherein the single-point-of-entry server (100) is further operable to:
• Provide an IP-tunnelling to the single-point-of-entry server (100) of a plurality of web sites (140, 150) for the client (130), and
• Cluster of a plurality of requests at to be transmitted to the web site (140,150).

14. System according to any one of claims 9 to 13, wherein the single-point-of-entry server is further operable to:
• Log a domain of the host (140) hosting the requested web site by incrementing a connection count counting a frequency of the host (140) requested through the single-point-of-entry server, and
• After the client (130) being authenticated at the single-point-of-entry server (100), establish one or more connections from the client (130) to respective one or more frequently requested hosts.

15. System according to any one of claims 9 to 14, wherein the single-point-of-entry server (100) is further operable to:
• Embed a frame and/or an iframe in the modified response (403), wherein the frame and/or the iframe comprises data on the requested host (140) and/or user-specific information on the client (130).
